# EUROPEAN PATENT APPLICATION

(11) **EP 4 746 490 A1**
(43) Date of publication of application: **20.05.2026**
(21) Application number: 24841932.7
(22) Date of filing: 28.02.2024
(51) Int. Cl.: H04W 24/02

(54) **COMMUNICATION METHOD AND APPARATUS, AND STORAGE MEDIUM**

(30) Priority: 19.07.2023 CN 202310892593
(71) Applicant: ZTE Corporation, Shenzhen, Guangdong 518057 (CN)
(72) Inventor: LI, Yong, Shenzhen, Guangdong 518057 (CN); LI, Lun, Shenzhen, Guangdong 518057 (CN); ZHENG, Guozeng, Shenzhen, Guangdong 518057 (CN); LU, Zhaohua, Shenzhen, Guangdong 518057 (CN)
(74) Representative: Ziebig Hengelhaupt Intellectual Property Attorneys Patentanwaltskanzlei PartGmbB
(86) International application number: PCT/CN2024/079097
(87) International publication number: WO 2025/015928

(57) **Abstract**

The present application relates to the technical field of communications. Provided are a communication method and apparatus, and a storage medium, which can enable a base station to determine a transmission mode having an appropriate transmission effect. The method comprises: receiving configuration information, wherein the configuration information is used for configuring a reference signal resource set, and the reference signal resource set comprises M reference signal resources, M being a positive integer; obtaining a measurement result on the basis of the configuration information; and sending the measurement result.

## Description

The present disclosure claims priority to Chinese Patent Application No. 202310892593.6, filed on July 19, 2023, which is hereby incorporated by reference in its entirety.

### TECHNICAL FIELD

The present disclosure relates to the technical field of communications, and in particular, to a communication method and apparatus, and a storage medium.

### BACKGROUND

A base station may transmit data in different transmission modes. For example, antennas of the base station transmit data by using different spatial filters, or the antennas of the base station transmit data by using different precoding matrices. A terminal obtains a spatial filter or precoding matrix by performing measurement on wireless channels and performing corresponding calculations, and then feed the obtained spatial filter or the precoding matrix back to the base station. Since a wireless channel is time-varying, the base station needs to adjust the transmission mode to adapt to the wireless channel, for example, switching from one transmission mode to another.

The larger the computational load of the terminal, and the more time-domain and frequency-domain resources are used when the terminal feeds back the spatial filter or the precoding matrix, the more accurate the spatial filter or precoding matrix obtained by the base station, that is, the better the transmission effect. Acquisition costs for different transmission modes are different. The transmission mode with better transmission effect usually corresponds to higher acquisition cost. Therefore, it is necessary to balance the acquisition cost and transmission effect for the transmission mode to determine an appropriate transmission mode. How to measure reference signal resources and feed a measurement result back, so that the base station can determine a transmission mode with appropriate transmission effect is a technical problem that needs to be solved urgently.

### SUMMARY

A communication method and apparatus, and a storage medium are provided in the present disclosure, which enable a base station to determine a transmission mode with the appropriate transmission effect.

To achieve the above-mentioned objectives, the following technical solutions are adopted in the present disclosure.

In a first aspect, a communication method is provided, and the method includes:
receiving configuration information, where the configuration information is used to configure a reference signal resource set, the reference signal resource set includes M reference signal resources, and M is a positive integer;
obtaining a measurement result based on the configuration information; and
sending the measurement result.

In a second aspect, a communication method is provided, and the method includes:
sending configuration information, where the configuration information is used to configure a reference signal resource set, the reference signal resource set includes M reference signal resources, and M is a positive integer;
receiving a measurement result.

In a third aspect, a communication apparatus is provided, and the apparatus includes:
a receiving unit, configured to receive configuration information, where the configuration information is used to configure a reference signal resource set, the reference signal resource set includes M reference signal resources, and M is a positive integer;
a processing unit, configured to obtain a measurement result based on the configuration information; and
a sending unit, configured to send the measurement result.

In a fourth aspect, a communication apparatus is provided, and the apparatus includes:
a sending unit, configured to send configuration information, where the configuration information is used to configure a reference signal resource set, the reference signal resource set includes M reference signal resources, and M is a positive integer;
a receiving unit, configured to receive a measurement result.

In a fifth aspect, there is provided a communication apparatus, which includes: a processor and a memory; where the memory stores instructions that are executable for the processor; the processor is configured to, upon performing the instructions, cause the communication apparatus to implement the method according to any one of the above-mentioned first aspect or the second aspect.

In a sixth aspect, there is provided a computer-readable storage medium. The computer-readable storage medium stores computer instructions that, when run on a computer, cause the computer to perform the method according to any one of the above-mentioned first aspect or the second aspect.

In a seventh aspect, there is provided a computer program product including computer instructions. In response that the computer instructions are run on a computer, the computer is caused to perform the method according to any one of the above-mentioned first aspect or the second aspect.

In the embodiments of the present disclosure, configuration information is received, then the measurement result is obtained based on the configuration information, and corresponding measurement result is fed back. Since the measurement result is obtained based on the configuration information, that is, the measurement result is obtained based on the reference signal resource set indicated by the base station, and the M reference signal resources included in the reference signal resource set can be understood as the reference signal resources whose measurement result needs to be obtained by the base station, thus the measurement result obtained based on the configuration information enables the base station to determine a transmission mode with the appropriate transmission effect.

### BRIEF DESCRIPTION OF THE DRAWINGS

The accompanying drawings are used to provide a further understanding of the technical solutions of the present disclosure, and constitute a part of the specification, which is used to explain the technical solutions of the present disclosure together with the embodiments of the present disclosure, and do not constitute a limitation on the technical solutions of the present disclosure.
FIG. 1 is a structural schematic diagram of a communication system provided in the embodiments of the present disclosure.
FIG. 2 is a schematic flowchart of a communication method provided in the embodiments of the present disclosure.
FIG. 3 is a schematic flowchart of another communication method provided in the embodiments of the present disclosure.
FIG. 4 is a schematic diagram of composition of a communication apparatus provided in the embodiments of the present disclosure.
FIG. 5 is a schematic diagram of composition of another communication apparatus provided in the embodiments of the present disclosure.
FIG. 6 is a structural schematic diagram of a communication apparatus provided in the embodiments of the present disclosure.

### DETAILED DESCRIPTION

The technical solutions in the embodiments of the present disclosure will be described below clearly and completely in conjunction with the accompanying drawings. Obviously, the described embodiments are merely a part of the embodiments of the present disclosure, but not all of the embodiments of the present disclosure. All other embodiments obtained according to the embodiments of the present disclosure by those of ordinary skill in the art without paying any creative effort shall be included in the protection scope of the present disclosure.

Unless otherwise required by the context, throughout the specification and claims, a term "comprise" or "include" and variations thereof (such as a third person singular form "comprises" or "includes" and a present participle form "comprising" or "including") is interpreted as open and inclusive, which means "include, but not limited to." In the description of the specification, terms "one/an embodiment," "some embodiments," "exemplary embodiments," "example," "specific example," or "some examples" are intended to indicate that specific features, structures, materials, or characteristics related to the embodiment or example are included in at least one embodiment or example in the present disclosure. Schematic representations of the above terms do not necessarily refer to the same embodiment(s) or example(s). In addition, the described specific features, structures, materials, or characteristics may be included in any one or more embodiments or examples in any suitable manner.

Expressions such as "first" and "second" are used for descriptive purposes only, and are not to be understood as indicating or implying a relative importance or implicitly indicating a number of indicated technical features. Thus, features limited with the expressions such as "first" or "second" may explicitly or implicitly include one or more of the features. In the description of the present disclosure, wordings "multiple", "a plurality of" or "the plurality of" mean a number of two or more than two.

In the embodiments of the present disclosure, wordings, such as "exemplarily" or "for example" and variations thereof are used to indicate examples, instances, or illustrations. Any embodiment or design solution described in the embodiments of the present disclosure with wordings such as "exemplarily" or "for example" should not be illustrated as being more preferred or advantageous over other embodiments or design solutions. Specifically, the usage of the wordings such as "exemplarily" or "for example" and variations thereof are intended to present relevant concepts in a concrete way.

In addition, the usage of the phrase "based on" is meant to be open and inclusive, since a process, step, calculation or other actions that are "based on" one or more of the described conditions or values may, in practice, be based on additional conditions or exceed those described values.

The wireless channel is time-varying, and the base station needs to adjust the transmission mode to adapt to the wireless channel, for example, switching from one transmission mode to another. Switching between transmission modes by the base station may result in additional performance loss. For example, switching between transmission modes may introduce additional delay in data transmission, and the switching may also cause some scheduling parameters related to data transmission to be incompatible, thereby incurring performance loss costs. The performance loss costs caused by switching between different transmission modes are different.

The base station transmits reference signals using different reference signal resources, which means that the base station transmits the reference signals using different transmission modes. Different transmission modes have different transmission effects. The terminal feeds back measurement results on different reference signal resources to the base station, so as to reflect the transmission effects of different transmission modes. Thus, in one aspect, acquisition costs for different transmission modes are different. In another aspect, the performance loss costs of switching between different transmission modes are different. In yet another aspect, the terminal needs to spend a lot of time domain and frequency domain resources to feed back the measurement results of the reference signal resources representing different transmission modes. Therefore, how to measure the reference signal resources and feed the measurement result back so that the base station can determine a transmission mode with appropriate transmission result is a technical problem that needs to be solved urgently.

Based on this, embodiments of the present disclosure provide a communication method and apparatus, and a storage medium, configuration information is received, thus a measurement result is obtained based on the configuration information, and the corresponding measurement result is fed back. Since the measurement result is obtained based on the configuration information, that is, the measurement result is obtained based on the reference signal resource set indicated by the base station, and the M reference signal resources included in the reference signal resource set can be understood as the reference signal resources whose measurement result needs to be obtained by the base station, thus the measurement result obtained based on the configuration information enables the base station to determine a transmission mode with the appropriate transmission effect.

The solutions of the embodiments of the present disclosure may be introduced below in conjunction with the accompanying drawings.

The technical solutions provided in the embodiments of the present disclosure may be applied to various mobile communication networks, for example, new radio (NR) mobile communication networks using the 5th generation mobile networks (5G), future mobile communication networks, or multiple communication convergence systems, etc., which is not limited in the embodiments of the present disclosure.

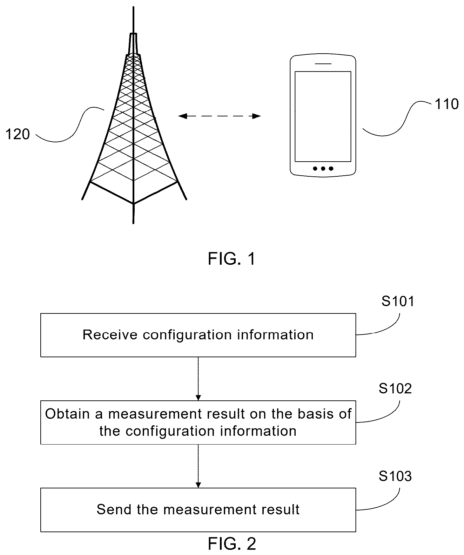

As shown in FIG. 1, FIG. 1 is a structural schematic diagram of a communication system provided in the embodiments of the present disclosure. As shown in FIG. 1, the communication system includes, but is not limited to a first communication node 110 and a second communication node 120, where wireless signals may be transmitted, received, or related interactions may be performed between the first communication node 110 and the second communication node 120.

In a wireless communication scenario, the first communication node 110 communicates with the second communication node 120 through a wireless channel. For example, the first communication node 110 is a terminal, the second communication node 120 is a base station, and the base station communicates with the terminal through a wireless channel. For another example, the first communication node 110 is a terminal, the second communication node 120 is a wireless router, and the wireless router communicates with the terminal through a wireless channel. For yet another example, the first communication node 110 is a first base station, the second communication node 120 is a second base station, and the first base station communicates with the second base station through a wireless channel. For yet another example, the first communication node 110 is a first terminal, the second communication node 120 is a second terminal, and the first terminal communicates with the second terminal through a wireless channel. For yet another example, the first communication node 110 is a relay, the second communication node 120 is a base station, and the base station communicates with the relay through a wireless channel. For yet another example, the first communication node 110 is a terminal, the second communication node 120 is a relay, and the relay communicates with the terminal through a wireless channel. For yet another example, the first communication node 110 is a first relay, the second communication node 120 is a second relay, and the first relay communicates with the second relay through a wireless channel. For yet another example, the first communication node 110 is a base station, the second communication node 120 is a satellite, and the satellite communicates with the base station through a wireless channel. For yet another example, the first communication node 110 is a satellite, the second communication node 120 is a base station, and the base station communicates with the satellite through a wireless channel. For yet another example, the first communication node 110 is a terminal, the second communication node 120 is a satellite, and the satellite communicates with the terminal through a wireless channel. For yet another example, the first communication node 110 is a satellite, the second communication node 120 is a terminal, and the terminal communicates with the satellite through a wireless channel. For yet another example, the first communication node 110 is a terrestrial device, the second communication node 120 is an aircraft, and the aircraft communicates with the terrestrial device through a wireless channel. For another example, the first communication node 110 is a first aircraft, the second communication node 120 is a second aircraft, and the first aircraft communicates with the second aircraft through a wireless channel.

The base station may be any node of an evolution nodeB (eNB), a next generation nodeB (gNB), a transmission and receiving point (TRP), a transmission point (TP), or some other access nodes. Based on a size of a provided service coverage area, the base station may further be classified into a macro base station for providing a macro cell, a pico base station for providing a pico cell, or a femto base station for providing a femto cell. With the continuous evolution of wireless communication technologies, a future base station may also adopts other names.

The terminal may be a device with wireless transceiving functions (such as a mobile phone, a tablet, a wearable device, a vehicle-mounted device, a augmented reality (AR)/virtual reality (VR) device, a laptop, an ultra-mobile personal computer (UMPC), a net-book, a personal digital assistant (PDA), etc.). A specific type of the terminal is not limited in the embodiments of the present disclosure.

It should be understood that FIG. 1 is an exemplary structural diagram, and a number of devices included in the communication system shown in FIG. 1 is not limited, for example, a number of first communication node and a number of the second communication node is not limited. Furthermore, in addition to the devices shown in FIG. 1, the communication system shown in FIG. 1 may further include other devices, which is not limited thereto.

Next, as shown in FIG. 2, a communication method is provided in the embodiments of the present disclosure, and the method is applied to a first communication node. The first communication node may be the first communication node 110 shown in FIG. 1. The method includes the following S101 to S103.

In S101, configuration information is received.

In some embodiments, in a case where the second communication node needs to determine a transmission mode with appropriate transmission effects with the first communication node, the second communication node sends the configuration information to the first communication node. Correspondingly, the first communication node receives the configuration information sent from the second communication node. The second communication node may be the second communication node 120 in the communication system shown in FIG. 1 above. For example, the following text takes the first communication node as the terminal and the second communication node as the base station to illustrate a communication method provided in the embodiments of the present disclosure.

Herein, the configuration information is used to configure a reference signal resource set, the reference signal resource set includes M reference signal resources, and M is a positive integer. A reference signal resource is used to carry a reference signal, and reference signals corresponding to different transmitting modes can be carried by different reference signal resources.

As an example, the configuration information is used to indicate an identification number of the reference signal resource set, or is used to indicate an index number of the reference signal resource set. As another example, the configuration information is used to indicate the M reference signal resources included in the reference signal resource set.

In some embodiments, there is an arrangement sequence for reference signal resources in the reference signal resource set, and an index number of a reference signal resource in the reference signal resource set may be determined according to the arrangement sequence of the reference signal resource in the reference signal resource set. Herein, the arrangement sequence for the reference signal resources in the reference signal resource set may be generated by the first communication node, or may be indicated by arrangement sequence indication information sent from the second communication node. The arrangement sequence indication information may be included in the above-mentioned configuration information, or may be included in other signaling different from the configuration information, which is not limited in the embodiments of the present disclosure.

In S102, a measurement result is obtained based on the configuration information.

In some embodiments, obtaining the measurement result based on the configuration information may refer to that the first communication node measures all reference signal resources in the reference signal resource set, obtains the measurement values of all reference signal resources in the reference signal resource set, and then takes the measurement values of all reference signal resources as the measurement result, or takes measurement values of a portion of reference signal resources among the measurement values of all reference signal resources as the measurement result; alternatively may refer to that the first communication node measures a portion of reference signal resources in the reference signal resource set, obtains measurement values of the portion of reference signal resources, and then takes the measurement values of the portion of reference signal resources as the measurement result.

Based on this, the measurement result includes measurement values of N first reference signal resources, where a first reference signal resources belongs to the reference signal resource set, and N is a positive integer smaller than or equal to M.

It should be understood that in a case where N is a positive integer smaller than M, it means that the first communication node measures a portion of the reference signal resources in the reference signal resource set to obtain the measurement result, or it means that the first communication node measures all of the reference signal resources in the reference signal resource set, and then takes measurement values of a portion of reference signal resources among the measurement values of all of the reference signal resources as the measurement result. In a case where N is equal to M, it means that the first communication node measures all of the reference signal resources in the reference signal resource set to obtain the measurement result.

Herein, the first reference signal resource may be understood as a reference signal resource whose measurement value needs to be fed back, and a measurement value of a reference signal resource may include at least one of: a reference signal received power, a reference signal interference-to-noise ratio, reference signal received strength, and reference signal received quality.

In some examples, S102 may be implemented as following X1 and X2.

In X1, a second reference signal resource is determined based on the configuration information.

Herein, the second reference signal resource may be called by other names, such as a specific reference signal resource or a target reference signal resource, etc.

In some embodiments, the second reference signal resource is determined according to an arrangement sequence related to the M reference signal resources.

As an example, the arrangement sequence related to the M reference signal resources includes at least one of:
an arrangement sequence of the M reference signal resources in the reference signal resource set;
an arrangement sequence of the M reference signal resources in time domain; or
an arrangement sequence of measurement values of the M reference signal resources.

As a possible example, the second reference signal resource is a reference signal resource at a preset position in the arrangement sequence related to the M reference signal resources. The preset position include a first position, a last position, a K-th position, etc.

Taking the second reference signal resource being determined based on the arrangement sequence of M reference signal resources in the reference signal resource set as an example, for example, a reference signal resource that is located at a first position in the arrangement sequence of the M reference signal resources in the reference signal resource set may be determined as the second reference signal resource. For another example, a reference signal resource that is located at a last position in the arrangement sequence of the M reference signal resources in the reference signal resource set may be determined as the second reference signal resource. For yet another example, the reference signal resource that is located at the K-th position in the arrangement sequence of the M reference signal resources in the reference signal resource set may be determined as the second reference signal resource. Herein, K may be a non-negative integer preset by a protocol or indicated by the second communication node, and the arrangement sequence of the M reference signal resources in the reference signal resource set may be a fixed arrangement sequence.

Taking the second reference signal resource being determined based on the arrangement sequence of M reference signal resources in the time domain as an example, for example, a reference signal resource that is located at a first position in the arrangement sequence of the M reference signal resources in the time domain may be determined as the second reference signal resource. For another example, a reference signal resource that is located at a last position in the arrangement sequence of the M reference signal resources in the time domain may be determined as the second reference signal resource. For yet another example, the reference signal resource that is located at a K-th position in the arrangement sequence of the M reference signal resources in the time domain may be determined as the second reference signal resource. Herein, the arrangement sequence of the M reference signal resources in the time domain may be understood as the temporal order of the M reference signal resources, and the arrangement sequence of the M reference signal resources in the time domain may be a fixed arrangement sequence in the time domain.

Taking the second reference signal resource being determined based on the arrangement sequence of the measurement values of the M reference signal resources as an example, for example, a reference signal resource that is located at a first position in the arrangement sequence of the measurement values of the M reference signal resources may be determined as the second reference signal resource. For another example, a reference signal resource that is located at a last position in the arrangement sequence of the measurement values of the M reference signal resources may be determined as the second reference signal resource. For yet another example, the reference signal resource that is located at a K-th position in the arrangement sequence of the measurement values of the M reference signal resources may be determined as the second reference signal resource. Herein, the arrangement sequence of the measurement values of the M reference signal resources may be understood as a value sequence of measurement values of the M reference signal resources in the reference signal resource set. The arrangement sequence of the measurement values of the M reference signal resources can be a fixed arrangement sequence.

As another possible example, the second reference signal resource is a reference signal resource indicated by the second communication node.

In some embodiments, before obtaining the measurement result, the first communication node receives first indication information sent from the second communication node, where the first indication information is used to indicate a position of the second reference signal resource in the arrangement sequence. After receiving the first indication information, the first communication node may determine the position of the second reference signal resource in the arrangement sequence based on the first indication information.

The first indication information may be included in the above-mentioned configuration information, or may be included in other signaling different from the configuration information, such as a first signaling, which is not limited in the present disclosure.

For example, taking the arrangement sequence being the arrangement sequence of the M reference signal resources in the reference signal resource set as an example, a way to indicate the position of the second reference signal resource in the arrangement sequence is to indicate a serial number of the second reference signal resource in the arrangement sequence for the reference signal resource set, or another way to indicate the position of the second reference signal resource in the arrangement sequence is bit mapping, i.e., each bit is mapped to an ordered position, and a bit state of a bit is used to indicate whether a reference signal resource corresponding to an ordered position to which the bit is mapped is the second reference signal resource. For example, in a case where a bit state of a bit is 0, it means that a reference signal resource corresponding to an ordered position to which the bit is mapped is the second reference signal resource, and in a case where a bit state of a bit is 1, it means that a reference signal resource corresponding to an ordered position to which the bit is mapped is not the second reference signal resource. For another example, in a case where a bit state of a bit is 1, it means that a reference signal resource corresponding to an ordered position to which the bit is mapped is the second reference signal resource; in a case where a bit state of a bit is 0, it means that a reference signal resource corresponding to an ordered position to which the bit is mapped is not the second reference signal resource.

For yet another example, taking the arrangement sequence being the arrangement sequence of the M reference signal resources in the time domain as an example, a way to indicate the position of the second reference signal resource in the arrangement sequence is to indicate a serial number of the second reference signal resource in the arrangement sequence in the time domain, or another way to indicate the position of the second reference signal resource in the arrangement sequence is bit mapping, i.e., each bit is mapped to an ordered position, and a bit state of a bit is used to indicate whether a reference signal resource corresponding to an ordered position to which the bit is mapped is the second reference signal resource. For example, in a case where a bit state of a bit is 0, it means that a reference signal resource corresponding to an ordered position to which the bit is mapped is the second reference signal resource, and in a case where a bit state of a bit is 1, it means that a reference signal resource corresponding to an ordered position to which the bit is mapped is not the second reference signal resource. For yet another example, in a case where a bit state of a bit is 1, it means that a reference signal resource corresponding to an ordered position to which the bit is mapped is the second reference signal resource; in a case where a bit state of a bit is 0, it means that a reference signal resource corresponding to an ordered position to which the bit is mapped is not the second reference signal resource.

For yet another example, taking the arrangement sequence being the arrangement sequence of the measurement values of the M reference signal resources as an example, a way to indicate the position of the second reference signal resource in the arrangement sequence is to indicate a serial number of the second reference signal resource in the arrangement sequence of the measurement values of the M reference signal resources, or another way to indicate the position of the second reference signal resource in the arrangement sequence is bit mapping, i.e., each bit is mapped to an ordered position, and a bit state of a bit is used to indicate whether a reference signal resource corresponding to an ordered position to which the bit is mapped is the second reference signal resource. For example, in a case where a bit state of a bit is 0, it means that a reference signal resource corresponding to an ordered position to which the bit is mapped is the second reference signal resource, and in a case where a bit state of a bit is 1, it means that a reference signal resource corresponding to an ordered position to which the bit is mapped is not the second reference signal resource. For yet another example, in a case where a bit state of a bit is 1, it means that a reference signal resource corresponding to an ordered position to which the bit is mapped is the second reference signal resource; in a case where a bit state of a bit is 0, it means that a reference signal resource corresponding to an ordered position to which the bit is mapped is not the second reference signal resource.

For yet another example, the first indication information indicates an index number of the second reference signal resource in the reference signal resource set. For yet another example, the first indication information indicates an identification number of the second reference signal resource.

In X2, the measurement values of the N first reference signal resources is obtained based on the second reference signal resource.

As an example, obtaining the measurement values of the N first reference signal resources based on the second reference signal resource may include at least one of the following Examples 1 to 10.

Example 1: the measurement values of the N first reference signal resources include: top N measurement values among the measurement values of the M reference signal resources excluding a measurement value of the second reference signal resource in a descending order of values.

That is, with the measurement value of the second reference signal resource as a reference, measurement values of the N reference signal resources with top N measurement values excluding the measurement value of the second reference signal resource are determined from the measurement values of the M reference signal resources as the measurement values of the N first reference signal resources.

For example, taking the second reference signal resource being located at the first position in the arrangement sequence for the reference signal resource set, the measurement values of N reference signal resources with the top N measurement values are correspondingly determined from the measurement values of the reference signal resources excluding the first reference signal resource as the measurement values of the N first reference signal resources. For another example, taking the second reference signal resource being located at a K-th position in the arrangement sequence for the reference signal resource set, the measurement values of N reference signal resources with the top N measurement values are correspondingly determined from the measurement values of the reference signal resources excluding the reference signal resource that is located at the K-th position as the measurement values of the N first reference signal resources. Herein, K and N may be indicated by the same signaling or the same configuration information; K and N may also be indicated by different signaling or different configuration information.

Example 2: the measurement values of the N first reference signal resources include: measurement values whose number is not greater that a target number and which are greater than a measurement value of the second reference signal resource among the measurement values of the M reference signal resources.

Herein, the target number may be preset by a protocol or indicated by the second communication node, which is not limited in the present disclosure.

Taking the target number being Q as an example, for example, taking the measurement value of the second reference signal resource as a reference, the measurement values of the M reference signal resources are compared with the measurement value of the second reference signal resource, and no more than Q measurement values greater than the measurement value of the second reference signal are taken as the measurement values of the N first reference signal resources. According to the relationship between a number Z of measurement values greater than the measurement value of the second reference signal resource among the measurement values of the M reference signal resources and Q, the example 2 may include the following four cases.

Case 1: Z is greater than Q.

Corresponding to the case 1, one approach is to determine Q measurement values greater than the measurement value of the second reference signal resource from the Z measurement values as the measurement values of the N first reference signal resources. Another approach is: corresponding to Q being greater than 1, L measurement values greater than the measurement value of the second reference signal resource is determined from the Z measurement values as the measurement values of the N first reference signal resources, where L is a positive integer smaller than Q. Yet another approach is: corresponding to Q being equal to 1, one measurement value greater than the measurement value of the second reference signal resource is determined as the measurement value of the N first reference signal resources.

Case 2: Z is equal to Q.

Corresponding to the case 2, one approach is to determine Z measurement values greater than the measurement value of the second reference signal resource as the measurement values of the N first reference signal resources. Another approach is: corresponding to Q being greater than 1, L measurement values greater than the measurement value of the second reference signal resource is determined as the measurement values of the N first reference signal resources. Yet another approach is: corresponding to Q being equal to 1, one measurement value greater than the measurement value of the second reference signal resource is determined as the measurement value of the N first reference signal resources.

Case 3: Z is smaller than Q and greater than 0.

Corresponding to the case 3, Z measurement values greater than the measurement value of the second reference signal resource are determined as the measurement values of the N first reference signal resources.

Case 4: Z is equal to 0.

Corresponding to the case 4, one approach is to feed back that there is no measurement value of a reference signal resource meeting a condition, and another approach is to determine N measurement values closest to the measurement value of the second reference signal resource as the measurement values of the N first reference signal resources.

The example 2 is illustrated below by examples with reference to a specific example.

Exemplarily, for the case 1, assuming Z=10, when Q=9, one approach is to determine 9 measurement values greater than the measurement value of the second reference signal resource from 10 measurement values as the measurement values of the N first reference signal resources.

Another approach is: corresponding to Q being greater than 1, in a case of Q=9, L measurement values greater than the measurement value of the second reference signal resource are determined from 10 measurement values as the measurement values of the N first reference signal resources, where L may be any positive integer between 1 and 8, for example, L=8, that is, 8 measurement values greater than the measurement value of the second reference signal resource are determined from 10 measurement values as the measurement values of the N first reference signal resources. Yet another approach is: corresponding to Q being equal to 1, one measurement value greater than the measurement value of the second reference signal resource is determined as the measurement value of the N first reference signal resources.

For case 2, assuming Z=10 and Q=10, one approach is to determine 10 measurement values greater than the measurement value of the second reference signal resource as the measurement values of the N first reference signal resources.

Another approach is: corresponding to Q being greater than 1, L measurement values greater than the measurement value of the second reference signal resource are determined as the measurement values of the N first reference signal resources, where L may be any positive integer between 1 and 9, for example, L=9, that is, 9 measurement values greater than the measurement value of the second reference signal resource are determined from 10 measurement values as the measurement values of the N first reference signal resources.

Yet another approach is: corresponding to Q being equal to 1, one measurement value greater than the measurement value of the second reference signal resource is determined as the measurement value of the N first reference signal resources.

For case 3, assuming Z=8 and Q=10, 8 measurement values greater than the measurement value of the second reference signal resource may be determined as the measurement values of the N first reference signal resources.

In this way, based on the above cases, the number of measurement values of the first reference signal resources among the measurement values of the M reference signal resources does not exceed the target number Q.

Example 3: the measurement values of the N first reference signal resources include: all of measurement values greater than a measurement value of the second reference signal resource among the measurement values of the M reference signal resources.

For example, taking the measurement value of the second reference signal resource as a reference, the measurement values of the M reference signal resources are compared with the measurement value of the second reference signal resource, and all of measurement values greater than the measurement value of the second reference signal resource are taken as the measurement values of the N first reference signal resources.

Example 4: the measurement values of the N first reference signal resources include: measurement values whose number is not greater than a target number and which are greater than or equal to a measurement value of the second reference signal resource among the measurement values of the M reference signal resources.

For example, taking the measurement value of the second reference signal resource as a reference, the measurement values of the M reference signal resources are compared with the measurement value of the second reference signal resource, and no more than Q measurement values greater than or equal to the measurement value of the second reference signal are taken as the measurement values of the N first reference signal resources.

The description of a specific case of taking no more than Q measurement values greater than or equal to the measurement value of the second reference signal as the measurement values of N first reference signal resources may refer to the description of case 1 to case 4 in the above-mentioned example 2, which is not repeated herein.

Example 5: the measurement values of the N first reference signal resources include: measurement values greater than or equal to a measurement value of the second reference signal resource among the measurement values of the M reference signal resources.

For example, taking the measurement value of the second reference signal resource as a reference, the measurement values of the M reference signal resources are compared with the measurement value of the second reference signal resource, and measurement values greater than the measurement value of the second reference signal resource are taken as the measurement values of the N first reference signal resources.

Example 6: the measurement values of the N first reference signal resources include: measurement values whose number is not greater than a target number and which are greater than or equal to a measurement value of the second reference signal resource among the measurement values of the M reference signal resources excluding the measurement value of the second reference signal resource.

For example, taking the measurement value of the second reference signal resource as a reference, measurement values of the M reference signal resources excluding the measurement value of the second reference signal resource are compared with the measurement value of the second reference signal resource, and measurement values whose number is not greater than the target number and which are greater than or equal to the measurement value of the second reference signal are taken as the measurement values of the N first reference signal resources.

The description of a specific case of taking the measurement values whose number is not greater than the target number and which are greater than or equal to the measurement value of the second reference signal resource among the measurement values of the M reference signal resources excluding the measurement value of the second reference signal resource as the measurement values of N first reference signal resources may refer to the description of case 1 to case 4 in the above-mentioned example 2, which is not repeated herein.

Example 7: the measurement values of the N first reference signal resources include: measurement values whose number is not greater than a target number and which are greater than a measurement value threshold among the measurement values of the M reference signal resources.

Herein, the measurement value threshold is equal to a sum of a measurement value of the second reference signal resource and an offset value. The offset value may be preset by a protocol, or may be indicated by configuration information, first signaling, or second signaling sent from the second communication node, where the second signaling is different from the first signaling.

For example, taking the measurement value threshold as a reference, the measurement values of the M reference signal resources are compared with the measurement value threshold, and measurement values whose number is not greater than Q and which are greater than the measurement value threshold are taken as the measurement values of the N first reference signal resources. According to a relationship between a number Y of measurement values greater than the measurement value threshold among the measurement values of the M reference signal resources and Q, the example 7 may include the following four cases.

Case 1: Y is greater than Q.

For case 1, one approach is to determine Q measurement values greater than the measurement value threshold from Y measurement values as the measurement values of the N first reference signal resources. Another approach is: corresponding to Q being greater than 1, L measurement values greater than the measurement value threshold are determined from the Y measurement values as the measurement values of the N first reference signal resources. Another approach is: corresponding to Q being equal to 1, one measurement value greater than the measurement value threshold is determined as the measurement values of the N first reference signal resources.

Case 2: Y is equal to Q.

For case 2, one approach is to determine Q measurement values greater than the measurement value threshold from as the measurement values of the N first reference signal resources. Another approach is: corresponding to Q being greater than 1, L measurement values greater than the measurement value threshold are determined as the measurement values of the N first reference signal resources. Another approach is: corresponding to Q being equal to 1, one measurement value greater than the measurement value threshold is determined as the measurement values of the N first reference signal resources.

Case 3: Y is smaller than Q and greater than 0.

For case 3, L measurement values greater than the measurement value threshold are determined as the measurement values of the N first reference signal resources.

Case 4: Y is equal to 0.

For the case 4, one approach is to feed back that there is no measurement value of a reference signal resource meeting a condition, and another approach is to determine N measurement values closest to the measurement value of the second reference signal resource as the measurement values of the N first reference signal resources.

Example 8: the measurement values of the N first reference signal resources include: measurement values whose number is not greater than a target number and which are greater than or equal to the measurement value threshold among the measurement values of the M reference signal resources.

For example, taking the measurement value threshold as a reference, measurement values of the M reference signal resources excluding the measurement value of the second reference signal resource are compared with the measurement value threshold, and measurement values whose number is not greater than the target number and which are greater than or equal to the measurement value threshold are taken as the measurement values of the N first reference signal resources.

The description of a specific case of taking the measurement values whose number is not greater than the target number and which are greater than or equal to the measurement value threshold among the measurement values of the M reference signal resources excluding the measurement value of the second reference signal resource as the measurement values of N first reference signal resources may refer to the description of case 1 to case 4 in the above-mentioned example 7, which is not repeated herein.

Example 9: the measurement values of the N first reference signal resources include: all of measurement values greater than the measurement value threshold among the measurement values of the M reference signal resources.

For example, taking the measurement value threshold as a reference, the measurement values of the M reference signal resources are compared with the measurement value threshold, and all of measurement values greater than the measurement value threshold among the measurement values of the M reference signal resources are taken as the measurement values of the N first reference signal resources.

Example 10: the measurement values of the N first reference signal resources include: measurement values greater than or equal to the measurement value threshold among the measurement values of the M reference signal resources.

For example, taking the measurement value threshold as a reference, the measurement values of the M reference signal resources are compared with the measurement value threshold, and measurement values greater than or equal to the measurement value threshold among the measurement values of the M reference signal resources are taken as the measurement values of the N first reference signal resources. It should be understood that, compared with the above-mentioned example 9, in the solution of example 10, measurement values equal to the measurement value threshold among the measurement values of the M reference signal resources are also taken as measurement values of the first reference signal resources.

It should be noted that, those skilled in the art may select any of the above manners to determine the second reference signal resource and determine the measurement values of N first reference signal resources according to actual application scenarios, which are not limited in the embodiments of the present disclosure.

In the above embodiments, the second reference signal resource is taken as a reference to obtain the measurement values of the N first reference signal resources.

In some embodiments, the first communication node may further receive second indication information sent from the second communication node, and then determine the N first reference signal resources according to the second indication information, so as to obtain measurement values of the N first reference signal resources. Herein, the second indication information is used to indicate the N first reference signal resources. The second indication information may be included in the above-mentioned configuration information, or included in a signaling different from the above-mentioned configuration information, such as the above-mentioned first signaling, the second signaling, or a third signaling different from the first signaling and the second signaling, which is not limited herein.

In some embodiments, the second indication information includes a value of N, that is, the second indication information indicates that the first communication node needs to feed back the measurement values of the N first reference signal resources.

As an example, the N first reference signal resources include one of the following: first N reference signal resources in an arrangement sequence related to the M reference signal resources; last N reference signal resources in the arrangement sequence related to the M reference signal resources; first N reference signal resources in an arrangement sequence related to remaining reference signal resources among the M reference signal resources excluding the second reference signal resource; last N reference signal resources in the arrangement sequence related to the remaining reference signal resources among the M reference signal resources excluding the second reference signal resource; in the arrangement sequence related to the M reference signal resources, X reference signal resources located before the second reference signal resource and (N-X) reference signal resources located after the second reference signal resource, where X is an integer smaller than or equal to N and greater than or equal to 0.

In some embodiments, the arrangement sequence related to the remaining reference signal resources may include one of: an arrangement sequence of the remaining reference signal resources in the reference signal resource set; an arrangement sequence of the remaining reference signal resources in time domain; or an arrangement sequence of measurement values of the remaining reference signal resources.

Herein, the arrangement sequence of the remaining reference signal resources in the reference signal resource set may be determined by the first communication node, or may be indicated by the configuration information sent from the second communication node or may be indicated by other signaling different from the configuration information, which is not limited in the embodiments of the present disclosure.

The description of the arrangement sequence related to the remaining reference signal resources may refer to the above description of the arrangement sequence related to the M reference signal resources, which is not repeated herein.

In some embodiments, in a case where a number of the M reference signal resources included in the reference signal resource set is relatively large, candidate first reference signal resources may further be determined according to the arrangement sequence related to the M reference signal resources, and then the N first reference signal resources may be determined from the candidate first reference signal resources.

As a possible example, in a case where the arrangement sequence related to the M reference signal resources is the arrangement sequence of the M reference signal resources in the reference signal resource set, reference signal resources at even-numbered arrangement positions in the arrangement sequence may be determined as the candidate first reference signal resources, or reference signal resources at odd-numbered arrangement positions in the arrangement sequence may be determined as the candidate first reference signal resources. Furthermore, the N first reference signal resources are determined from the candidate first reference signal resources.

As another possible example, in a case where the arrangement sequence related to the M reference signal resources is the arrangement sequence of the measurement values of the M reference signal resources, reference signal resources at even-numbered arrangement positions in the arrangement sequence may be determined as the candidate first reference signal resources, or reference signal resources at odd-numbered arrangement positions in the arrangement sequence may be determined as the candidate first reference signal resources.

In some embodiments, the N first reference signal resources (or the candidate first reference signal resources) may be determined according to the arrangement sequence and a predefined pattern positions.

In some embodiments, an index number of a reference signal resource may be taken as an input, and reference signal resources meeting a condition according to calculation based on a specific function or according to a preset lookup table are taken as the N first reference signal resources, or may be determined as the candidate first reference signal resources.

As yet another possible example, in a case where the arrangement sequence related to the M reference signal resources is the arrangement sequence of the M reference signal resources in the time domain, a serial number of a reference signal resource in the arrangement sequence may be taken as an input, and reference signal resources meeting a condition according to calculation based on a specific function or according to a preset lookup table are taken as the N first reference signal resources.

As yet another example, the N first reference signal resources may be determined according to third indication information sent from the second communication node. Herein, the third indication information is used to indicate the arrangement sequence of the N first reference signal resources in the reference signal resource set in the time domain. For example, a reference signal resource corresponding to a serial number in the time domain within the reference signal resource set indicated by the third indication information may be taken as a first reference signal resource. For yet another example, a reference signal resource indicated by the second communication node in bit mapping is taken as a first reference signal resource. In the bit mapping, one bit corresponds to one reference signal resource, or to a group of reference signal resources, and bits from low to high correspond to the reference signal resources or reference signal resource groups from early to late in the time domain.

In some embodiments, a bit state of a bit is used to indicate whether a reference signal resource mapped by the bit is a first reference signal resource. For example, in a case where a bit state of a bit is 0, it represents that a reference signal resource mapped by the bit is a first reference signal resource; in a case where a bit state of a bit is 1, it represents that a reference signal resource mapped by the bit is not a first reference signal resource. For yet another example, in a case where a bit state of a bit is 1, it represents that a reference signal resource mapped by the bit is a first reference signal resource; in a case where a bit state of a bit is 0, it represents that a reference signal resource mapped by the bit is not a first reference signal resource.

In some embodiments, a bit state of a bit is further used to indicate whether a reference signal resource mapped by the bit is a candidate first reference signal resource. For example, in a case where a bit state of a bit is 0, it represents that a reference signal resource mapped by the bit is a candidate first reference signal resource; in a case where a bit state of a bit is 1, it represents that a reference signal resource mapped by the bit is not a candidate first reference signal resource. For yet another example, in a case where a bit state of a bit is 1, it represents that a reference signal resource mapped by the bit is a candidate first reference signal resource; in a case where a bit state of a bit is 0, it represents that a reference signal resource mapped by the bit is not a candidate first reference signal resource.

As another example, the N first reference signal resources may be determined according to the measurement values of M reference signal resources. Exemplarily, the N first reference signal resources may further include one of: reference signal resources whose measurement values are greater than a first threshold among the M reference signal resources; reference signal resources whose measurement values are greater than or equal to the first threshold among the M reference signal resources; reference signal resources whose measurement values are smaller than a second threshold among the M reference signal resources; reference signal resources whose measurement values are smaller than or equal to the second threshold among the M reference signal resources; reference signal resources whose measurement values are greater than the first threshold and smaller than or equal to the second threshold among the M reference signal resources; reference signal resources whose measurement values are greater than or equal to the first threshold and smaller than the second threshold among the M reference signal resources; reference signal resources whose measurement values are greater than or equal to the first threshold and smaller than or equal to the second threshold among the M reference signal resources. Herein, the second threshold is greater than the first threshold. The first threshold and the second threshold may be preset by a protocol or indicated by the second communication node, which is not limited in the embodiments of the present disclosure.

In some embodiments, reference signal resources whose measurement values are greater than the first threshold among the M reference signal resources may also be taken as candidate first reference signal resources; or reference signal resources whose measurement values are greater than or equal to the first threshold among the M reference signal resources may be taken as candidate first reference signal resources; or reference signal resources whose measurement values are smaller than the second threshold among the M reference signal resources may be taken as candidate first reference signal resources; or reference signal resources whose measurement values are smaller than or equal to the second threshold among the M reference signal resources may be taken as candidate first reference signal resources; or reference signal resources whose measurement values are greater than the first threshold and smaller than the second threshold among the M reference signal resources may be taken as candidate first reference signal resources; or reference signal resources whose measurement values are greater than the first threshold and smaller than or equal to the second threshold among the M reference signal resources may be taken as candidate first reference signal resources; or reference signal resources whose measurement values are greater than or equal to the first threshold and smaller than the second threshold may be taken as candidate first reference signal resources; or reference signal resources whose measurement values are greater than or equal to the first threshold and smaller than or equal to the second threshold among the M reference signal resources may be taken as candidate first reference signal resources. After determining the candidate first reference signal resources based on any of the above manners, the N first reference signal resources may be determined from the candidate first reference signal resources.

It should be noted that, those skilled in the art may select any of the above manners to determine the N first reference signal resources according to actual application scenarios, which are not limited in the embodiments of the present disclosure.

After determining the N first reference signal resources according to any of the above manners, the first communication node may measure the N first reference signal resources to obtain the measurement values of the N first reference signal resources; or obtain the measurement values of the N first reference signal resources in a case where the measurement values already exist.

In S103, the measurement result is sent.

It should be understood that the second communication node transmits a reference signal using different reference signal resources, which means that the reference signal is transmitted using different transmission modes, and different transmission modes have different transmission effects. The first communication node sends the measurement results to the second communication node to feed back the measurement result of different reference signal resources to the second communication node, so as to reflect the transmission effects of different transmission modes, so that the second communication node may determine the transmission mode with appropriate transmission effect between the second communication node and the first communication node based on the measurement result.

In some embodiments, the measurement result may include the measurement values of all reference signal resources in the reference signal resource set, or may include the measurement values of a portion of reference signal resources in the reference signal resource set, or may include the measurement values of all measured reference signal resources in the reference signal resource set, or may include the measurement values of a portion of measured reference signal resources among the measured reference signal resources in the reference signal resource set, or may feed the measurement values of the first reference signal resources in the reference signal resource set back.

As an example, sending the measurement result may be sending the measurement values of the N first reference signal resources according to the arrangement sequence of the N first reference signal resources in the time domain. In this way, the second communication node may analyze the measurement values of the N first reference signal resources in an orderly manner based on the arrangement sequence of the N first reference signal resources in the time domain, so as to determine a transmission mode with an appropriate transmission effect.

As another example, sending the measurement result may be sending the measurement values of the N first reference signal resources according to the arrangement sequence of the measurement values of the N first reference signal resources. Herein, the arrangement sequence of the measurement values of the N first reference signal resources may be positively correlated with or negatively correlated with the magnitudes of the measurement values of the N first reference signal resources, which is not limited in the embodiments of the present disclosure. It should be understood that the measurement values of the N first reference signal resources are sent in the arrangement sequence of the measurement values of the N first reference signal resources, so that the second communication node receives the measurement values of the N first reference signal resources in an orderly manner, thereby enabling the second communication node to determine a transmission method with an appropriate transmission effect.

As another example, sending the measurement result may be sending all measurement values of N first reference signal resources.

As another example, in order to reduce the feedback overhead of the first communication node, sending the measurement result may be sending a portion of the measurement values of N first reference signal resources. In this way, since sent measurement values are a portion of the measurement values of the N first reference signal resources, the feedback overhead of the first communication node can be reduced.

It should be noted that the implementation manners corresponding to the above examples is capable of being arranged and combined. For example, a portion of the measurement values of the N first reference signal resources may be sent according to the arrangement sequence of the N first reference signal resources in the time domain, etc., which are not limited in the embodiments of the present disclosure.

In some embodiments, the measurement result may further include the above-mentioned measurement value of the second reference signal resource. Based on this, sending the measurement result may be sending the measurement value of the second reference signal resource first, and then sending the measurement values of the N first reference signal resources. Herein, sending the measurement value of the second reference signal resource first, and then sending the measurement values of the N first reference signal resources may be understood as putting the measurement value of the second reference signal resource first in the sending order.

In a case of sending the measurement value of the second reference signal resource, sending the measurement values of the N first reference signal resources may be: sending the measurement values of the N first reference signal resources according to the arrangement sequence of the measurement values of the N first reference signal resources; or sending the measurement values of the N first reference signal resources according to the arrangement sequence of the N first reference signal resources in the reference signal resource set; or sending the measurement values of the N first reference signal resources according to the arrangement sequence of the N first reference signal resources in the time domain, which is not limited in the embodiments of the present disclosure.

In some embodiments, upon the first communication node sending the measurement result, or after sending the measurement result, the first communication node may send an index value of a first reference signal resource in a set consisting of the N first reference signal resources to the second communication node, so that in a case where the second communication node needs to determine the transmission effect of the transmission mode corresponding to a first reference signal resource, it can quickly determine the corresponding first reference signal resource and its measurement value based on the index value of the first reference signal resource in the set, so as to improve the efficiency of the second communication node in determining the transmission mode with appropriate transmission effect.

Herein, the index value of a first reference signal resource in the set consisting of the N first reference signal resources may be an index value determined according to the arrangement sequence of the first reference signal resource in the reference signal resource set, or may also be an index value determined according to the arrangement sequence of the first reference signal resource in the M reference signal resources in the time domain. The index value may also be referred to as other names, for example, an index number.

In some embodiments, the arrangement sequence of the first reference signal resource in the reference signal resource set may be generated by the first communication node or indicated by the second communication node, which is not limited in the embodiments of the present disclosure.

Based on the embodiments shown in FIG. 2, the first communication node receives the configuration information, obtains a measurement result based on the configuration information, and feeds back the corresponding measurement result. Since the measurement result is obtained based on the configuration information, that is, the measurement result is obtained based on the reference signal resource set indicated by the second communication node, and the M reference signal resources included in the reference signal resource set can be understood as the reference signal resources whose measurement result needs to be obtained by the second communication node, that is, the second communication node indicates the reference signal resources whose measurement values needs to be fed back by the first communication node through the configuration information, and furthermore, the measurement result obtained by the first communication node on the reference signal resources based on the configuration information is required by the second communication node. In this way, measuring the reference signal resources based on the configuration information of the second communication node enables the second communication node to determine a transmission method with an appropriate transmission effect based on the measurement result. Moreover, in a case where the first communication node sends the measurement result, the first communication node may send a portion of the measurement values of the N first reference signal resources, thereby reducing the feedback overhead of the first communication node in feeding back the measurement result. Moreover, in a case of sending the measurement result, the first communication node may send the measurement values of the N first reference signal resources according to the arrangement sequence of the N first reference signal resources in the time domain, or may send the measurement values of the N first reference signal resources according to the arrangement sequence of the measurement values of the N first reference signal resources, so that the second communication node can receive the measurement values of the N first reference signal resources in an orderly manner, thereby enabling the second communication node to determine a transmission method with an appropriate transmission effect.

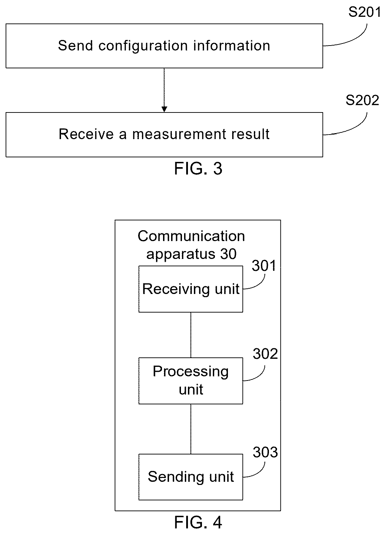

In some embodiments, as shown in FIG. 3, a communication method is provided in the embodiments of the present disclosure, and the method is applied to a second communication node. The second communication node may be the second communication node 120 shown in FIG. 1 above. The method includes the following S201 and S202.

In S201, configuration information is sent.

In some embodiments, in a case where the second communication node needs to determine a transmission mode with the first communication node, the second communication node sends the configuration information to the first communication node. Herein, the configuration information is used to configure a reference signal resource set, the reference signal resource set includes M reference signal resources, and M is a positive integer.

In S202, a measurement result is received.

Herein, the measurement result includes measurement values of N first reference signal resources, where a first reference signal resources belongs to the reference signal resource set, and N is a positive integer smaller than or equal to M.

The description of the measurement result may refer to the corresponding description of the measurement result in the above S103, which will not be repeated herein.

In some embodiments, the measurement values of the N first reference signal resources are determined according to a second reference signal resource. The description of the second reference signal resource may refer to the corresponding description of S102 above, which will not be repeated herein.

In some embodiments, after the second communication node sends the configuration information to the first communication node, the second communication node may further send second indication information to the first communication node, where the second indication information is used to indicate the N first reference signal resources.

In some embodiments, after the second communication node receives the measurement result, the second communication node may determine a transmission mode with an appropriate transmission effect with the first communication node based on the measurement result.

The foregoing mainly introduces the solutions provided by the present disclosure from the perspective of interaction between various nodes. It can be understood that, in order to implement the above-mentioned functions, the various nodes (such as the first communication node and the second communication node) include corresponding hardware structures and/or software modules for performing the various functions. Those skilled in the art should easily realize that the present disclosure may be implemented in the form of hardware or a combination of hardware and computer software in combination with algorithms and steps described in the embodiments disclosed in the present disclosure. Whether a certain function is implemented by hardware or by computer software driving hardware depends on the specific application and design constraint conditions of the technical solutions. Professional technicians may use different methods to implement the described functions for each specific application, but such implementation should not be considered beyond the scope of the present disclosure.

As shown in FIG. 4, FIG. 4 is a schematic diagram of composition of a communication apparatus provided in the embodiments of the present disclosure. As shown in FIG. 4, the communication apparatus 30 includes a receiving unit 301, a processing unit 302 and a sending unit 303.

The communication apparatus 30 may be the above-mentioned first communication node or a chip in the first communication node. In a case where the communication apparatus 30 is configured to implement functions of the first communication node in the above embodiments, various units are specifically used to implement the following functions.

The receiving unit 301 is configured to receive configuration information, where the configuration information is used to configure a reference signal resource set, the reference signal resource set includes M reference signal resources, and M is a positive integer.

The processing unit 302 is configured to obtain a measurement result based on the configuration information.

The sending unit 303 is configured to send the measurement result.

In some embodiments, the measurement result includes measurement values of N first reference signal resources, where a first reference signal resource belongs to the reference signal resource set, and N is a positive integer smaller than or equal to M.

In some embodiments, the processing unit 302 is specifically configured to: determine a second reference signal resource based on the configuration information; and obtain the measurement values of the N first reference signal resources based on the second reference signal resource.

In some embodiments, the second reference signal resource is determined according to an arrangement sequence related to the M reference signal resources.

In some embodiments, the arrangement sequence related to the M reference signal resources includes one of: an arrangement sequence of the M reference signal resources in the reference signal resource set; an arrangement sequence of the M reference signal resources in time domain; or an arrangement sequence of measurement values of the M reference signal resources.

In some embodiments, the second reference signal resource is a reference signal resource at a preset position in the arrangement sequence related to the M reference signal resources.

In some embodiments, the receiving unit 301 is further configured to receive first indication information, where the first indication information is used to indicate a position of the second reference signal resource in the arrangement sequence.

In some embodiments, the measurement values of the N first reference signal resources include: top N measurement values among the measurement values of the M reference signal resources excluding a measurement value of the second reference signal resource in a descending order of values.

In some embodiments, the measurement values of the N first reference signal resources include: measurement values whose number is not greater than a target number and which are greater than a measurement value of the second reference signal resource among the measurement values of the M reference signal resources.

In some embodiments, the measurement values of the N first reference signal resources include: all of measurement values greater than a measurement value of the second reference signal resource among the measurement values of the M reference signal resources.

In some embodiments, the measurement values of the N first reference signal resources include: measurement values whose number is not greater than a target number and which are greater than a measurement value threshold among the measurement values of the M reference signal resources, and the measurement value threshold is equal to a sum of a measurement value of the second reference signal resource and an offset value.

In some embodiments, the measurement values of the N first reference signal resources include: all of measurement values greater than a measurement value threshold among the measurement values of the M reference signal resources, and the measurement value threshold is equal to a sum of a measurement value of the second reference signal resource and an offset value.

In some embodiments, the receiving unit 301 is further configured to receive second indication information, where the second indication information is used to indicate the N first reference signal resources.

In some embodiments, the second indication information includes a value of N.

In some embodiments, the N first reference signal resources include one of: first N reference signal resources in an arrangement sequence related to the M reference signal resources; last N reference signal resources in the arrangement sequence related to the M reference signal resources; first N reference signal resources in an arrangement sequence related to remaining reference signal resources among the M reference signal resources excluding the second reference signal resource; last N reference signal resources in the arrangement sequence related to the remaining reference signal resources among the M reference signal resources excluding the second reference signal resource; in the arrangement sequence related to the M reference signal resources, X reference signal resources located before the second reference signal resource and (N-X) reference signal resources located after the second reference signal resource, where X is an integer smaller than or equal to N and greater than or equal to 0.

In some embodiments, the arrangement sequence related to the remaining reference signal resources includes one of: an arrangement sequence of the remaining reference signal resources in the reference signal resource set; an arrangement sequence of the remaining reference signal resources in time domain; or an arrangement sequence of measurement values of the remaining reference signal resources.

In some embodiments, the sending unit 303 is specifically configured to: send a portion of measurement values among the measurement values of the N first reference signal resources.

In some embodiments, the sending unit 303 is further configured to: send an index value of a first reference signal resource in a set consisting of the N first reference signal resources.

In some embodiments, the sending unit 303 is specifically configured to: send the measurement values of the N first reference signal resources according to an arrangement sequence of the N first reference signal resources in the reference signal resource set.

In some embodiments, the sending unit 303 is specifically configured to: send the measurement values of the N first reference signal resources according to an arrangement sequence of the N first reference signal resources in time domain.

In some embodiments, the measurement result further includes a measurement value of the second reference signal resource.

In some embodiments, the sending unit 303 is specifically configured to: send the measurement value of the second reference signal resource first, and then send the measurement values of the N first reference signal resources.

In some embodiments, the sending unit 303 is specifically configured to: send the measurement values of the N first reference signal resources according to an arrangement sequence of the measurement values of the N first reference signal resources; or send the measurement values of the N first reference signal resources according to an arrangement sequence of the N first reference signal resources in the reference signal resource set; or send the measurement values of the N first reference signal resources according to an arrangement sequence of the N first reference signal resources in time domain.

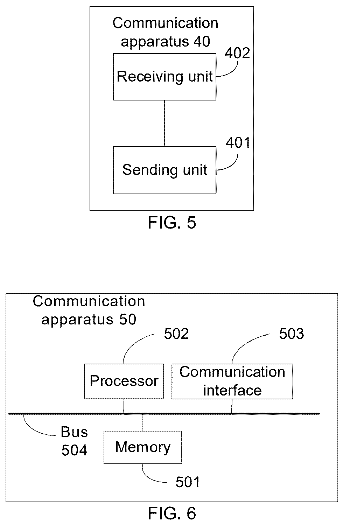

As shown in FIG. 5, FIG. 5 is a schematic diagram of composition of another communication apparatus provided in the embodiments of the present disclosure. As shown in FIG. 5, the communication apparatus 40 includes a sending unit 401 and a receiving unit 402.

The communication apparatus 40 may be the above-mentioned second communication node or a chip in the second communication node. In a case where the communication apparatus 40 is configured to implement functions of the second communication node in the above embodiments, various units are specifically used to implement the following functions.

The sending unit 401 is configured to send configuration information, where the configuration information is used to configure a reference signal resource set, the reference signal resource set includes M reference signal resources, and M is a positive integer.

The receiving unit 402 is configured to receive a measurement result.

In some embodiments, the measurement result includes measurement values of N first reference signal resources, where a first reference signal resource belongs to the reference signal resource set, and N is a positive integer smaller than or equal to M.

In some embodiments, the measurement values of the N first reference signal resources are determined according to a second reference signal resource.

In some embodiments, the sending unit 401 is further configured to send second indication information, where the second indication information is used to indicate the N first reference signal resources.

It should be noted that the units in FIG. 4 and FIG. 5 may also be referred to as modules. For example, a sending unit may be referred to as a sending module. In addition, in the embodiments shown in FIG. 4 and FIG. 5, the names of the various units may not be the names shown in the figures. For example, the sending unit may also be referred to as a communication unit, and the receiving unit may also be referred to as a communication unit.

If the various units in FIG. 4 and FIG. 5 are implemented in the form of the software functional unit and sold or used as independent products, they may be stored in a computer-readable storage medium. Based on this understanding, the technical solutions of the present disclosure may be essentially, or a part of the technical solutions of the present disclosure that contributes to the related technologies, or all or a portion of the technical solutions of the present disclosure may be, embodied in the form of a software product, and the computer software product may be stored in a storage medium including couples of instructions to enable a computer device (may be a personal computer, a server, a network device, etc.) or a processor to perform all or a portion of steps of the method in the various embodiments of the present disclosure. The storage medium for storing a computer software product includes various types of medium capable of storing program codes, such as a USB flash drive, a mobile disk, a read-only memory (ROM), a random-access memory (RAM), a magnetic disk, or an optical disk.

In a case where the communication apparatus 30 or the communication apparatus 40 implements the functions of the above-mentioned integrated modules by adopting the form of hardware, there is provided a structural schematic diagram of a communication apparatus in the embodiments of the present disclosure. As shown in FIG. 6, the communication apparatus 50 includes: a processor 502, a communication interface 503, and a bus 504. Optionally, the communication apparatus 50 may further include a memory 501.

The processor 502 may be implemented as or performed as various illustrative logical blocks, modules and circuits described in conjunction with disclosed contents of the present disclosure. The processor 502 may be a central processor, a general-purpose processor, a digital signal processor, an application specific integrated circuit, a field programmable gate array, or other programmable logic component, a transistor logic component, a hardware assembly, or any combination thereof. The processor 502 may implement or execute various illustrative logical blocks, modules and circuits described in conjunction with the disclosed contents of the present disclosure. The processor 502 may also be a combination that implements computing functions, for example, the processor 502 includes a combination of one or more microprocessors, a combination of a DSP (digital signal processor) and a microprocessor, or the like.

The communication interface 503 is configured to connect with other devices through a communication network. The communication network may be the Ethernet, a wireless access network, a wireless local area network (wireless local area network, WLAN), or the like.

The memory 501 may be a read-only memory (ROM) or other types of static storage devices that can store static information and instructions, a random access memory (RAM), or other types of dynamic storage devices that can store information and instructions, or an electrically erasable programmable read-only memory (EEPROM), a magnetic disk storage medium or any other magnetic storage devices, or any other medium that can be used to carry or store desired program codes with instructions or data and can be accessed by a computer, which is not limited thereto.

As a possible implementation, the memory 501 may exist independently from the processor 502, and the memory 501 may be connected to the processor 502 through the bus 504 for storing instructions or program codes. When the processor 502 invokes and executes the instructions or program codes stored in the memory 501, the processor 502 may implement the communication method provided in the embodiments of the present disclosure.

In another possible implementation, the memory 501 may be integrated with the processor 502.

The bus 504 may be an extended industry standard architecture (EISA) bus, or the like. The bus 504 may be classified as an address bus, a data bus, a control bus, or the like. For ease of representation, only one bold line is used in FIG. 6 for representing the bus 504, but it does not mean that there is only one bus or one type of bus.

Through the description of the above implementations, those of ordinary skill in the art can clearly understand that for the convenience and simplicity of the description, the division of the above functional modules is given merely as an example. In practical applications, the above functions can be allocated to different functional modules according to requirements, that is, the internal structure of the base station or terminal may be divided into different functional modules to complete all or part of the functions described above.

The computer-readable storage medium (for example, a non-transitory computer-readable storage medium) is further provided in the embodiments of the present disclosure. All or part of the processes in the above method embodiments may be implemented by relevant information of an information hardware instructed by computer instructions. The programs may be stored in the above-mentioned computer-readable storage medium, and when executed, the programs may include the processes as described in the above method embodiments. The computer-readable storage medium may be an internal storage in any of the aforementioned embodiments. The above-mentioned computer-readable storage medium may also be an external storage device of the above-mentioned first communication node or the second communication node, such as a plug-in hard disk, a smart media card (SMC), a secure digital (SD) card, a flash card, etc., equipped on the above-mentioned first communication node or the second communication node. Furthermore, the above-mentioned computer-readable storage medium may include both an internal storage unit and an external storage device of the above-mentioned first communication node or second communication node. The above-mentioned computer-readable storage medium is configured to store the above-mentioned computer programs and other programs and data required by the above-mentioned first communication node or second communication node. The above-mentioned computer-readable storage medium may further be configured to temporarily store data that has been output or is to be output.

A computer program product is further provided in the embodiments of the present disclosure. The computer program product includes computer programs that, upon being run on a computer, enable the computer to perform any one of the communication methods provided in the above-mentioned embodiments.

Although the present disclosure is described herein in conjunction with various embodiments, other variations of the disclosed embodiments may be understood and implemented by those skilled in the art by viewing the accompanying drawings, the disclosed contents, and the attached claims during the implementation of the present disclosure claimed to be protected. In the claims, "comprise/comprises/comprising" does not exclude other components or steps, and "a/an" or "one" does not exclude a number of a plurality. A single processor or other units may implement couples of functions listed in the claims. Some measures are recorded in different dependent claims, but this does not mean that these measures cannot be combined to produce good results.

Although the present disclosure is described in conjunction with specific features and embodiments thereof, obviously, various modifications and combinations can be made thereto without departing from the spirit and scope of the present disclosure. Accordingly, the specification and accompanying drawings herein are merely exemplary illustration of the present disclosure defined by the claims and are deemed to cover any and all modifications, variations, combinations or equivalents within the scope of the present disclosure. Obviously, those skilled in the art can make various modifications and variations to the present disclosure without departing from the spirit and scope of the present disclosure. In this way, if these modifications and variations of the present disclosure fall within the scope of the claims of the present disclosure and their equivalent technologies, the present disclosure is also intended to include these modifications and variations.

The above descriptions are merely specific implements of the present disclosure, but the scope of protection of the present disclosure is not limited thereto, and any variations or replacements within the technical scope disclosed in the present disclosure shall fall within the protection scope of the present disclosure. Therefore, the protection scope of the present disclosure should be subject to the protection scope of the claims.

## Claims

1. A communication method, comprising:
receiving configuration information, wherein the configuration information is used to configure a reference signal resource set, the reference signal resource set comprises M reference signal resources, wherein M is a positive integer;
obtaining a measurement result based on the configuration information; and
sending the measurement result.

2. The method according to claim 1, wherein the measurement result comprises measurement values of N first reference signal resources, wherein a first reference signal resource belongs to the reference signal resource set, and N is a positive integer smaller than or equal to M.

3. The method according to claim 2, wherein obtaining the measurement result based on the configuration information comprises:
determining a second reference signal resource based on the configuration information;
obtaining the measurement values of the N first reference signal resources based on the second reference signal resource.

4. The method according to claim 3, wherein the second reference signal resource is determined according to an arrangement sequence related to the M reference signal resources.

5. The method according to claim 1, wherein the arrangement sequence related to the M reference signal resources comprises one of:
an arrangement sequence of the M reference signal resources in the reference signal resource set;
an arrangement sequence of the M reference signal resources in time domain; or
an arrangement sequence of measurement values of the M reference signal resources.

6. The method according to claim 3, wherein the second reference signal resource is a reference signal resource at a preset position in an arrangement sequence related to the M reference signal resources.

7. The method according to claim 4, wherein the method further comprises:
receiving first indication information, wherein the first indication information is used to indicate a position of the second reference signal resource in the arrangement sequence.

8. The method according to claim 3, wherein the measurement values of the N first reference signal resources comprise: top N measurement values among the measurement values of the M reference signal resources excluding a measurement value of the second reference signal resource in a descending order of values.

9. The method according to claim 3, wherein the measurement values of the N first reference signal resources comprise: measurement values whose number is not greater than a target number and which are greater than a measurement value of the second reference signal resource among the measurement values of the M reference signal resources.

10. The method according to claim 3, wherein the measurement values of the N first reference signal resources comprise: all of measurement values greater than a measurement value of the second reference signal resource among the measurement values of the M reference signal resources.

11. The method according to claim 3, wherein the measurement values of the N first reference signal resources comprise: measurement values whose number is not greater than a target number and which are greater than a measurement value threshold among the measurement values of the M reference signal resources, and the measurement value threshold is equal to a sum of a measurement value of the second reference signal resource and an offset value.

12. The method according to claim 3, wherein the measurement values of the N first reference signal resources comprise: all of measurement values greater than a measurement value threshold among the measurement values of the M reference signal resources, and the measurement value threshold is equal to a sum of a measurement value of the second reference signal resource and an offset value.

13. The method according to claim 2, further comprising:
receiving second indication information, wherein the second indication information is used to indicate the N first reference signal resources.

14. The method according to claim 13, wherein the second indication information comprises a value of N.

15. The method according to claim 13, wherein the N first reference signal resources comprise one of:
first N reference signal resources in an arrangement sequence related to the M reference signal resources;
last N reference signal resources in the arrangement sequence related to the M reference signal resources;
first N reference signal resources in an arrangement sequence related to remaining reference signal resources among the M reference signal resources excluding the second reference signal resource;
last N reference signal resources in the arrangement sequence related to the remaining reference signal resources among the M reference signal resources excluding the second reference signal resource;
in the arrangement sequence related to the M reference signal resources, X reference signal resources located before the second reference signal resource and (N-X) reference signal resources located after the second reference signal resource, wherein X is an integer smaller than or equal to N and greater than or equal to 0.

16. The method according to claim 15, wherein the arrangement sequence related to the remaining reference signal resources comprise one of:
an arrangement sequence of the remaining reference signal resources in the reference signal resource set;
an arrangement sequence of the remaining reference signal resources in time domain; or
an arrangement sequence of measurement values of the remaining reference signal resources.

17. The method according to claim 13, wherein sending the measurement result comprises:
sending a portion of measurement values among the measurement values of the N first reference signal resources.

18. The method according to claim 13, further comprising:
sending an index value of a first reference signal resource in a set consisting of the N first reference signal resources.

19. The method according to claim 2, wherein sending the measurement result comprises:
sending the measurement values of the N first reference signal resources according to an arrangement sequence of the N first reference signal resources in the reference signal resource set.

20. The method according to claim 2, wherein sending the measurement result comprises:
sending the measurement values of the N first reference signal resources according to an arrangement sequence of the N first reference signal resources in time domain.

21. The method according to claim 2, wherein sending the measurement result comprises:
sending the measurement values of the N first reference signal resources according to an arrangement sequence of the measurement values of the N first reference signal resources.

22. The method according to claim 2, wherein the measurement result further comprises a measurement value of a second reference signal resource.

23. The method according to claim 22, wherein sending the measurement result comprises:
sending the measurement value of the second reference signal resource first, and then sending the measurement values of the N first reference signal resources.

24. The method according to claim 23, wherein sending the measurement values of the N first reference signal resources comprises:
sending the measurement values of the N first reference signal resources according to an arrangement sequence of the measurement values of the N first reference signal resources; or
sending the measurement values of the N first reference signal resources according to an arrangement sequence of the N first reference signal resources in the reference signal resource set; or
sending the measurement values of the N first reference signal resources according to an arrangement sequence of the N first reference signal resources in time domain.

25. A communication method, comprising:
sending configuration information, wherein the configuration information is used to configure a reference signal resource set, the reference signal resource set comprises M reference signal resources, wherein M is a positive integer;
receiving a measurement result.

26. The method according to claim 25, wherein the measurement result comprises measurement values of N first reference signal resources, wherein a first reference signal resource belongs to the reference signal resource set, and N is a positive integer smaller than or equal to M.

27. The method according to claim 26, wherein the measurement values of the N first reference signal resources are determined according to a second reference signal resource.

28. The method according to claim 26, further comprising:
sending second indication information, wherein the second indication information is used to indicate the N first reference signal resources.

29. A communication apparatus, comprising: a processor and a memory;
wherein the memory stores instructions that are executable for the processor;
the processor is configured to, upon performing the instructions, cause the communication apparatus to implement the method according to any one of claims 1 to 28.

30. A computer-readable storage medium, wherein the computer-readable storage medium comprises computer instructions that, when run on a computer, cause the computer to perform the method according to any one of claims 1 to 28.
